Europäisches Patentamt

European Patent Office

Office européen des brevets

(19)

(11) **EP 1 575 279 A2**

(12) # EUROPEAN PATENT APPLICATION

(43) Date of publication:
**14.09.2005 Bulletin 2005/37**

(51) Int Cl.⁷: **H04N 5/232**

(21) Application number: **05004586.3**

(22) Date of filing: **02.03.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **10.03.2004 JP 2004067751**

(71) Applicant: **Fujinon Corporation
Saitama (JP)**

(72) Inventor: **Moriya, Chikatsu
Saitama-shi Saitama (JP)**

(74) Representative: **Klunker . Schmitt-Nilson . Hirsch
Winzererstrasse 106
80797 München (DE)**

(54) **Image blur correcting device**

(57)    An image blur correcting device for reducing phase delay of an angle signal caused by the processing time of filter operation, etc. with a filter characteristic of a digital filter and enhancing antivibration performance in the image blur correcting device for detecting vibration of an optical system of an taking lens or the like by an angular velocity sensor and controlling an antivibration lens on the basis of an angle signal achieved by digitally integrating an angular velocity signal from the angular velocity sensor with a digital filter.

EP 1 575 279 A2

## Description

## BACKGROUND OF THE INVENTION

### TECHNICAL FIELD OF THE INVENTION

The present invention relates to an image blur correcting device, and particularly to an image blur correcting device for correcting (preventing) image blur of a camera due to vibration.

### DESCRIPTION OF THE RELATED ART

For example, as an image blur correcting device of a television camera is known a device in which an antivibration lens is disposed in an image pickup optical system so as to be freely movable within a plane perpendicular to the optical axis, and when a camera (the image pickup optical system of the camera) is vibrated, the antivibration lens is driven by an actuator so as to offset the image blur caused by the vibration, thereby correcting the image blur. For example, according to the image blur correcting device disclosed in JP-A-2002-229089, the vibration applied to the camera is detected by a vibration detecting sensor (angular velocity sensor, acceleration sensor or the like), and the antivibration lens is controlled on the basis of a vibration signal output from a vibration detecting sensor to displace the antivibration lens to a position where the image blur is corrected.

When an angular velocity sensor is used as a vibration detecting sensor, an angular velocity signal output as a vibration signal from the angular velocity sensor is subjected to integration processing to be converted to an angle signal, and the antivibration lens is displaced from a reference position on the basis of the angle signal. In this case, there is known a device in which the integration processing when the angular velocity signal is converted to the angle signal is not analog processing, but digital processing. For example, an analog angular velocity signal output from the angular velocity sensor is converted to a digital signal by an A/D converter, and then subjected to the integration processing (digital integration) whereby the integration processing is carried out by the digital processing. The integration processing based on the digital filter is the operation processing containing at least an integration element which is carried out to determine from the angular velocity signal the position (target position) of the antivibration lens for correcting the image blur detected on the basis of the angular velocity signal. In this specification, even when the angle signal achieved through the integration processing in the digital filter does not represent an accurate integration value of the angular velocity signal, it may be also called as an angle signal. Furthermore, it is assumed that the angle signal concerned indicates the value of the position (target position) of the antivibration lens for correcting the image blur detected on the basis of the angular velocity signal.

The characteristic of the digital filter for carrying out the digital integration has the characteristic of a low pass filter, and also has such a phase characteristic that the delay of the phase of the output signal approaches to zero degree (the delay is smaller) as the frequency of the input signal is reduced when the input signal to the digital filter has a frequency lower than the cutoff frequency, and also the delay of the phase of the output signal approaches to 90 degree (the delay is larger) as the frequency of the input signal is increased when the input signal of the digital filter has a frequency higher than the cutoff frequency. According to the digital filter having such a phase characteristic, in the frequency area higher than the cutoff frequency, the digital filter has an integration action on an input signal having such a frequency that the phase delay of the corresponding output signal is substantially equal to 90 degrees. According to the image blur correcting device described above, an angular velocity signal having a frequency to be subjected to image blur correction is converted to an angle signal by the digital filter having the low pass filter characteristic having a cutoff frequency lower than the angular velocity signal of the frequency to be subjected to the image blur correction in the angular velocity signals output from the angular velocity sensor.

However, when the angular velocity signal (input signal) is converted to the angle signal (output signal) by the digital filter, the phase delay with respect to each frequency of the angular velocity signal output from the angular velocity sensor contains not only a delay (90 degrees ideally) caused by the integration action, but also a delay caused by a time (processing time) needed to each processing. For example, a phase delay is caused by a processing time from the time when a new input value (the value of an angular velocity signal) is given to the digital filter until the time when an output value (the value of an angle signal) responding to the input value is calculated and output. If the processing time is equal to 1ms, a phase delay of 360* (1/1000) = 0.36 degrees occurs for an input signal (sine wave signal) of 1Hz, a phase delay of 360* (10/1000) = 3.6 degrees occurs for an input signal of 10Hz, and a phase delay of 360* (20/1000) = 7.2 degrees occurs for an input signal of 20Hz. That is, as the frequency of the input signal is increased, the phase delay of the output signal is increased in accordance with the processing time. Furthermore, the phase delay also occurs due to the processing time in the A/D converter for converting an analog angular velocity signal output from the angular velocity sensor to a digital signal. Furthermore, when an angle signal achieved by the digital filter is output as an instruction signal indicating a movement position (target position) of an antivibration lens to a driving circuit for driving the antivibration lens, the phase delay is caused by the processing time in a D/A converter for converting a digital instruction signal to an analog signal.

Therefore, there is a problem that even when the phase of each frequency component of an angular velocity signal is delayed by 90 degrees through the digital integration, the phase delay is larger than 90 degrees because of the phase delay caused by the processing time as described above, and particularly the phase delay concerned is more increased as the frequency is higher, so that the antivibration performance is lowered.

As a countermeasure to the above problem, it is general to advance the phase by using a differentiation circuit or a digital filter having a differentiation characteristic, thereby compensating the phase delay caused by the processing time. However, when the phase is advanced by differentiation, the gain is also increased. Therefore, the balance between the phase and the gain is broken in the process of converting the angular velocity signal to the angle signal, so that the antivibration performance is lowered at high frequencies.

The present invention has been implemented in view of such a situation.

## SUMMARY OF THE INVENTION

An object of the invention is to provide an image blur correcting device with which the phase delay of an output signal of a digital filter which is caused by a time required to each processing such as filter operation, etc. is reduced by the filter characteristic of the digital filter when digital integration based on the digital filter is used, thereby enhancing antivibration performance.

In order to attain the above object, according to an image blur correcting device of the invention, an image blur correcting device for achieving a vibration signal indicating vibration of an optical system for focusing an image from vibration detecting unit, digitally integrating the vibration signal thus achieved by a digital filter, and correcting image blur caused by the vibration of the optical system on the basis of an output signal which is achieved through the digital integration and output from the digital filter, is characterized in that the digital filter calculates an addition value $W_n = (X_n + B1 \cdot W_{n-1})$ achieved by adding an input value $X_n$ (n=1,2,3,..) sampled and input from the vibration signal every predetermined sampling period to a value $B1 \cdot w_{n-1}$ achieved by multiplying a multiplication constant B1 and a delay value $W_{n-1}$ calculated at the input time of an input value $X_{n-1}$ which was previously input by one sampling, stores the addition value $W_n$ thus calculated as a delay value $W_n$, calculates an addition value $Y_n = (A0 \cdot W_n + A1 \cdot W_{n-1})$ achieved by adding a multiplication value $A0 \cdot W_n$ of the addition value $W_n$ and a multiplication constant A0 to a multiplication value $A1 \cdot W_{n-1}$ of the delay value $W_{n-1}$ and a multiplication constant A1, and outputs the addition value $Y_n$ thus calculated as an output value $Y_n$, and the multiplication constant A0 is set to satisfy 0<A0<1 and set to a value near to 1 while the multiplication constant A is set to satisfy 0<A1<1 and set to a value near to zero.

According to the present invention, the digital filter for carrying out digital integration has such a characteristic that when the frequency is low, the phase delay of the output signal of the digital filter approaches to 90 degrees as the frequency is increased as in the case of the related art and also the phase delay is gradually reduced as the frequency is increased when the frequency is equal to a certain frequency or more. Therefore, the phase delay caused by the processing times of the filter operation, etc. canbe reduced. It is general in the related art that the multiplication constants A0 and A1 of the digital filter are set to the same value and also set to a value near to zero.

Furthermore, the gain of the digital filter of the present invention also has substantially the same characteristic as the related art, and thus there occurs no disadvantage that the balance between the phase and the gain is broken and thus the antivibration performance is lowered at high frequencies.

According to the image blur correcting device of the invention, the multiplication constant B1 of the digital filter is preferably set to satisfy 0<B1<1 and also set to a value near to 1.

According to the image blur correcting device of the invention, it is preferable that the vibration detecting unit is an angular velocity sensor for detecting an angular velocity of the vibration of the optical system, and the vibration signal is an angular velocity signal.

According to the image blur correcting device of the present invention, the digital filter for carrying out the digital integration has such a filter characteristic that the phase delay of the output signal is reduced as the frequency of the input signal is higher, so that the phase delay caused by the processing time can be reduced, and the antivibration performance can be enhanced.

## BRIEF DESCRIPTION OF THE DRAWINGS

Fig. 1 is a diagram showing the internal construction of an embodiment of an image blur correcting device of the present invention.
Fig. 2 is a block diagram showing the operation processing of a digital filter in a hardware style.
Figs. 3A and 3B are diagrams showing a filter characteristic of a digital filter based on multiplication constants of an embodiment.
Figs. 4A and 4B are diagrams showing a filter characteristic of a digital filter based on related art multiplication constants.

## DETAILED DESCRIPTION OF THE INVENTION

Apreferred embodiment of an image blur correcting device according to the present invention will be described hereunder with reference to the accompanying drawings.

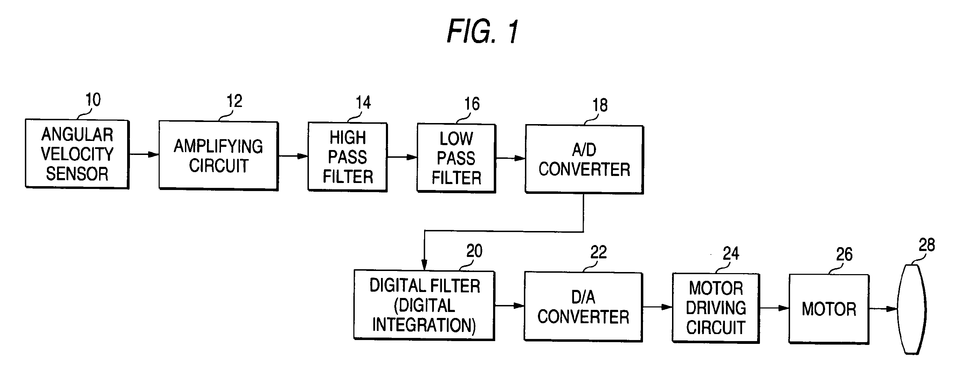

Fig. 1 is a diagram showing the internal construction of an embodiment of an image blur correcting device according to the present invention. The image blur correcting device is mounted in a lens device (taking lens) for a television camera, a movie camera, a still camera or the like, and an antivibration lens 28 is disposed in the lens device or an optical system of the camera or the like in which the image blur correcting device is mounted so that it is movable in the up-and-down direction (vertical direction) and in the right-and-left direction (horizontal direction) within a plane perpendicular to the optical axis. The antivibration lens 28 is driven in the up-and-down direction or in the right-and-left direction by a motor 26, and it is moved to an image blur correcting position (a position at which image blur caused by vibration is offset) by the motor 26 when the camera (optical system) is vibrated. The antivibration lens 28 is driven in the same manner in accordance with vibration occurring in each direction with respect to the up-and-down direction and the right-and-left direction. Accordingly, only the construction for correcting image blur with respect to one direction is shown in Fig. 1, and the same construction is applied to the other directions.

An angular velocity sensor 10 shown in Fig. 1 is a gyro sensor, for example, and used as a vibration detecting sensor for detecting vibration of an optical system. The angular velocity sensor 10 is mounted on the top face of a lens barrel, for example, and outputs an electrical signal whose voltage corresponds to a detected angular velocity. The signal output from the angular velocity sensor 10 will be hereinafter referred to as angular velocity signal.

After the angular velocity signal output from the angular velocity sensor 10 is amplified by an amplifying circuit 12, DC components are removed therefrom by a high pass filter 14, and high frequency noises are removed by a low pass filter 16. Subsequently, the analog angular velocity signal is converted to a digital signal by an A/D converter 18, and then sampled at a predetermined sampling period by a digital filter 20.

The processing of the digital filter 20 will be described in detail later, and the digital filter 20 conducts integration processing (digital integration) on the angular velocity signal which is sampled at the predetermined sampling period, thereby calculating an angle signal. The value of the angle signal is a target value indicating the position (target position) of the antivibration lens 28 for correcting image blur, and the digital filter 20 outputs the angle signal calculated from the angular velocity signal as an instruction signal to a D/A converter 22.

The instruction signal output to the D/A converter 22 is converted from the digital signal to the corresponding analog signal by the D/A converter 22, and then input to a motor driving circuit 24. In response to the instruction signal, the motor 26 is driven by the motor driving circuit 24, and the antivibration lens 28 is moved to the target position indicated by the instruction signal.

Accordingly, the antivibration lens 28 is displaced to the position at which the image blur occurring due to the vibration detected by the angular velocity sensor 10 is corrected, and the image blur is corrected (prevented).

Next, the digital filter 20 will be described in detail. Specifically, the digital filter 20 comprises a circuit for carrying out operation processing of IIR (Infinite Impulse Response) filter, and a circuit which is specialized for a digital filter may be used as the digital filter 20. For example, digital operating means such as CPU or the like which can carry out the same processing as the digital filter in a software style according to a program may be used as the digital filter 20.

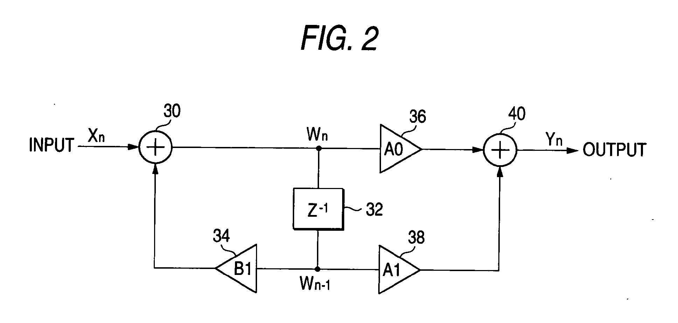

Fig. 2 is a block diagram showing the operation processing of the digital filter 20 in a hardware style, and the content of the operation processing of the digital filter 20 will be described with reference to Fig. 2.

The digital filter 20 successively samples the value of the angular velocity signal output from the angular velocity sensor 10 from the A/D converter 18 at a predetermined sampling period. In this case, an input value input to the digital filter 20 is represented by $X_n$ (n=1, 2, 3, ...). Furthermore, an output value output from the digital filter 20 in response to the input value $X_n$ is represented by $Y_n$ (n=1, 2, 3, ...).

As shown in Fig. 2, the input value $X_n$ input to the digital filter 20 is first input to an adder 30. When an output value output from the adder 30 in response to this input value is represented by $W_n$ (n=1, 2, 3,...), an output value (delay value) $W_{n-1}$ of the adder 30 which was previously output by one sampling (at the input time of the input value $X_{n-1}$) is output, and the value $B1 \cdot W_{n-1}$ achieved by multiplying the delay value $W_{n-1}$ with the multiplication constant B1 is input from a multiplier 34 to the adder 30.

Accordingly, the output value $W_n$ represented by the following equation (1) is output from the adder 30.

$$W_n = X_n + B1 \cdot W_{n-1} \qquad (1)$$

That is, the digital filter 20 stores, as a delay time at the next sampling time, the value $W_{n-1}$ of the equation (1) at the input time of the input value $X_{n-1}$ which was previously input by one sampling before the input time of the input value $X_n$, and when the input value $X_n$ is input, the digital filter 20 calculates the value $W_n$ of the equation (1) from the input value $X_n$ and the delay value $W_{n-1}$ thus stored by using the multiplication constant B1. $W_n$ thus calculates is stored as a delay value at the next sampling time.

The output value $W_n$ output from the adder 30 is subsequently multiplied by the multiplication constant A0 by the multiplier 36, and the output value $A0 \cdot W_n$ of the multiplier 36 is input to the adder 40. Furthermore, the value $A1 \cdot W_{n-1}$ achieved by multiplying the delay value $W_{n-1}$ output from a delay unit 32 by the multiplication constant A1 is input from the multiplier 38 to the adder 40. Accordingly, the output value $Y_n$ represented by the following equation (2) is output as the output value of the digital filter 20 from the adder 40.

$$Y_n = A0 \cdot W_n + A1 \cdot W_{n-1} \qquad (2)$$

That is, the digital filter 20 calculates the value $Y_n$ of the equation (2) by using the value $W_n$ calculated from the equation (1), the delay value $W_{n-1}$ stored one sampling before and the multiplication constants A0, A1. The digital filter 20 outputs the value $Y_n$ thus calculated as an output value responding to the input value $X_n$ from the digital filter 20.

Subsequently, the values of the multiplication constants A0, A1, B1 set as filter coefficients will be described. The digital filter 20 carries out the digital integration by the above operation, and in the related art, the values of the multiplication constants A0, A1, B1 are set as follows:

$$A0 = 0.0008$$

$$A1 = 0.0008$$

$$B1 = 0.999$$

On the other hand, in this embodiment, the values of the multiplication constants A0, A1, B1 are set as follows:

$$A0 = 0.9999$$

$$A1 = 0.0008$$

$$B1 = 0.999$$

Accordingly, the values of A0 and A1 are different from each other unlike the related art, and the value of A0 is extremely larger than that of the related art. A1 is set to a value near to 0, however, A0 is set to a value near to 1. That is, the multiplication constants A0, A1, and B1 are set in the range larger than 0 and smaller than 1, A0 and B1 are set to values near to 1 (substantially 1) and A1 is set to a value near to zero (substantially zero). Specifically, A0 and B1 each is preferably set to a value of from 0.8 to 1, more preferably 0.9 to 1, and still more preferably 0.99 to 1. Also, A0 and B1 may have a same value or different values. On the contrary, A1 is preferably set to a value of from 0.0001 to 0.01.

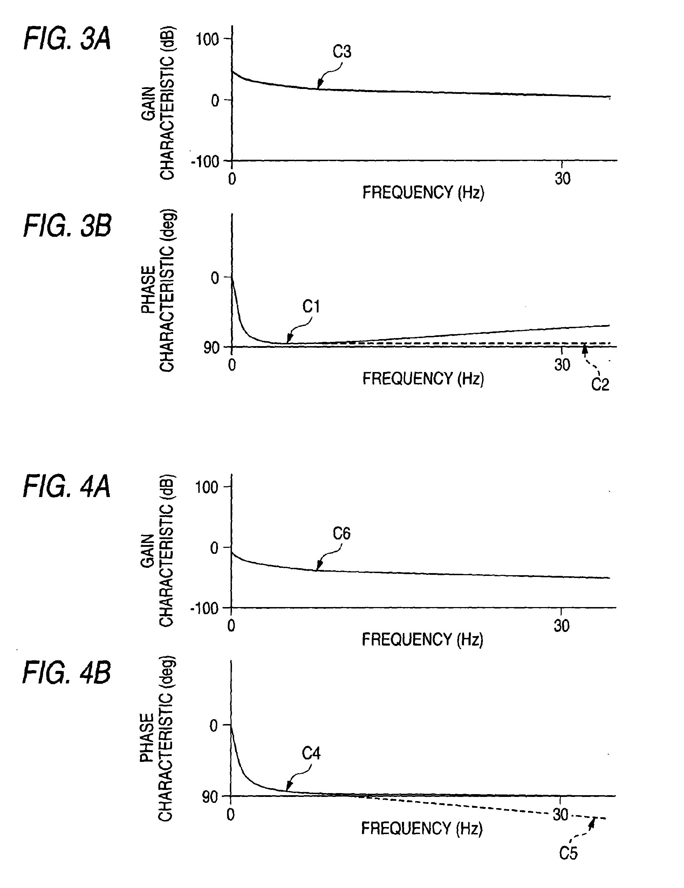

Figs. 3A and 3B show filter characteristics based on the multiplication constants of this embodiment, and Figs. 4A and 4B show filter characteristics of the multiplication constants of the related art. Figs. 3A, 3B, 4A and 4B show the filter characteristics to the frequency area (several Hz to several tens Hz) of vibration (angular velocity signal) to be subjected to the image blur correction. Fig. 3A and Fig. 4A show gain characteristics, and Figs. 3B and Fig. 4B show phase characteristics.

The multiplication constants of the related art provides the characteristic that the phase delay of the output signal (angle signal) approaches to 90 degrees as the frequency of the input signal (angular velocity signal) is higher as indicated by a solid line C4 of Fig. 4B. The frequency area in which the phase delay is advanced by an angle larger than 90 degrees in a low area of zero to several Hz is not a target vibration area to be subjected to image blur correction (the frequencies at which the phase delay is advanced by an angle larger than 90 degrees is very low, and thus no problem occurs even if the image blur correction is not carried out), but the signal in the area is cut off by the high pass filter 14 shown in Fig. 1.

On the other hand, with the multiplication constants of this embodiment, the same characteristics as the related art is exhibited in the low frequency area as indicated by a solid line C1 of Fig. 3B, and when the frequency is above a certain frequency, the phase delay is smaller than 90 degrees (advances) as the frequency is higher.

Here, a time for signal processing is needed from the time when an angular velocity signal of some value is output from the angular velocity sensor 10 until the time when an angle signal (instruction signal) responding to the value is supplied to the motor driving circuit 24. For example, in Fig. 1, the time for the processing of converting the analog signal to the digital signal in the A/D converter 18, the time for the processing of converting the digital signal to the analog signal in the D/A converter 22 and the time for the operation processing in the digital filter 20 are needed.

Therefore, the phase of the angle signal given to the motor driving circuit 24 is delayed with respect to the angular velocity signal output from the angular velocity sensor 10 by these processing times. The phase delay caused by these processing times is increased as the frequency is higher.

Therefore, when the phase characteristic considering the phase delay caused by the processing times and the phase delay caused by the filter characteristic in the digital filter are shown in Fig. 3B and Fig. 4B, the phase characteristic concerned is indicated by a broken C2 of Fig. 3B in the case of the multiplication constants of this embodiment, and it is indicated by a broken line C5 of fig. 4B in the case of the multiplication constants of the related art.

Accordingly, in the case of the multiplication constants of the related art, the phase delay is increased as the frequency is higher, and also the phase delay is greatly larger than 90 degrees when the frequency is increased, so that the antivibration performance is bad.

On the other hand, in the case of the multiplication constants of this embodiment, the phase delay is set by the filter characteristic so that it is reduced as the frequency is higher, and thus the phase delay caused by the processing time is reduced. Therefore, even when the frequency is higher, the phase delay is substantially fixed to 90 degrees. Accordingly, the antivibration performance can more enhanced as compared with the related art.

Comparing the gain characteristic as indicated by the solid line C3 of Fig. 3A in the case of the multiplication constants of this embodiment with the gain characteristic as indicated by the solid line C6 of Fig. 4A in the case of the multiplication constants of the related art, the magnitude of the gain is varied, however, substantially the same characteristic is provided. When the multiplication constants of this embodiment are used, there occurs no disadvantage that the balance between the phase and the gain is broken and thus the antivibration performance is lowered at high frequencies. In the case of the multiplication constants of this embodiment, the gain is larger than that in the case of the multiplication constants of the related art. Therefore, the input signal input to the digital filter 20 is subjected to gain adjustment in the amplifying circuit 12 of Fig. 1, CPU for carrying out the operation processing of the digital filter 20 or another circuit so that the gain is reduced to a value smaller than that in the case of the multiplication constants of the related art, and the antivibration lens 28 is displaced by proper magnitude in response to the magnitude of the vibration detected by the angular velocity sensor 10. Not the level of the input signal input to the digital filter 20, but the level of the output signal output from the digital filter 20 may be adjusted.

This application is based on Japanese Patent application JP 2004-067751, filed March 10, 2004, the entire content of which is hereby incorporated by reference. This claim for priority benefit is being filed concurrently with the filing of this application.

**Claims**

1. An image blur correcting device comprising: a vibration detecting unit that detects a vibration signal indicating a vibration of an optical system for focusing an image; and a digital filter that digitally integrates the vibration signal to generate an output signal, so as to correct an image blur based on the output signal,

    wherein the digital filter performs

    (i) calculating an addition value $W_n$ based on:
    $W_n = X_n + B1 \times W_{n-1}$ (n=1,2,3···),
    in which $X_n$ is an input value input by sampling the vibration signal every a sampling period, B1 is a first multiplication constant, and $W_{n-1}$ is a first delay value calculated when an input value $X_{n-1}$ was previously input by one sampling,
    (ii) storing the addition value $W_n$ as a delay value,
    (iii) calculating an addition value $Y_n$ based on:
    $Y_n = A0 \times W_n + A1 \times W_{n-1}$ (n=1,2,3···),
    in which A0 is a second multiplication constant which satisfies $0 < A0 < 1$ and is near to 1, and A1 is a third multiplication constant which satisfies $0 < A1 < 1$ and is near to 0, and
    (iv) outputting the addition value $Y_n$ as an output value $Y_n$ corresponding to the output signal.

2. The image blur correcting device according to claim 1, wherein the first multiplication constant B1 satisfies $0 < B1 < 1$ and near to 1.

3. The image blur correcting device according to claim 1, wherein the vibration detecting unit comprises an angular velocity sensor that detects an angular velocity of the vibration of the optical system, and the vibration signal is an angular velocity signal.

*FIG. 1*

EP 1 575 279 A2

# FIG. 2

FIG. 3A

FIG. 3B

FIG. 4A

FIG. 4B